(19) Europäisches Patentamt
European Patent Office
Office européen des brevets

(11) Veröffentlichungsnummer: **0 031 481**
**B1**

(12) # EUROPÄISCHE PATENTSCHRIFT

(45) Veröffentlichungstag der Patentschrift: **27.02.85**

(51) Int. Cl.⁴: **G 03 G 5/06,** G 03 G 5/09

(21) Anmeldenummer: **80107575.5**

(22) Anmeldetag: **04.12.80**

(54) **Material für elektrophotographische Reproduktion.**

(30) Priorität: **12.12.79 DE 2949826**

(43) Veröffentlichungstag der Anmeldung: **08.07.81 Patentblatt 81/27**

(45) Bekanntmachung des Hinweises auf die Patenterteilung: **27.02.85 Patentblatt 85/9**

(84) Benannte Vertragsstaaten: **AT BE CH DE FR GB IT LI NL SE**

(56) Entgegenhaltungen:
**DE - A - 1 447 907**
**DE - A - 2 526 720**
**DE - A - 2 817 428**
**FR - A - 1 375 297**
**FR - A - 1 488 489**
**US - A - 3 279 918**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Lind, Erwin, Dr., Holunderweg 7, D-6200 Wiesbaden (DE)**

**EP 0 031 481 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft ein elektrophotographisches Aufzeichnungsmaterial aus einem elektrisch leitenden, insbesondere zur Herstellung von Druckformen oder gedruckten Schaltungen geeigneten Schichtträger und einer photoleitfähigen Schicht aus organischem Photoleiter, alkalilöslichem Bindemittel, Sensibilisierungsfarbstoff aus zwischen 400 und 550 nm absorbierendem Cyaninfarbstoff und üblichen Zusätzen, wobei der Photoleiter eine Verbindung der allgemeinen Formel

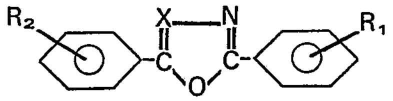

darstellt, in welcher

$R_1$ Wasserstoff, Alkyl, Alkoxy mit 1 bis 4 Kohlenstoffatomen, Halogen oder Dialkylamino mit 1 bis 4 Kohlenstoffatomen,

$R_2$ Dialkylamino mit 1 bis 4 Kohlenstoffatomen, und

X Stickstoff oder $-CR_3$ mit $R_3$ gegebenenfalls durch Halogen-, Alkylamino- oder Dialkylaminogruppen oder Alkyl mit 1 bis 4 Kohlenstoffatomen substituiertes Phenyl

bedeuten.

Es ist bekannt (DE-B Nr. 2526720), elektrophotographisches Aufzeichnungsmaterial zur Herstellung von Druckformen oder gedruckten Schaltungen zu verwenden, bei dem auf einem geeigneten Schichtträger eine photoleitfähige Schicht angeordnet ist, die ein Bindemittel und als Sensibilisierungsfarbstoff für den Photoleiter einen Cyaninfarbstoff mit einem Absorptionsmaximum zwischen 400 und 550 nm enthält. Dieses Material ist hervorragend geeignet zur Belichtung mit einem Argonionenlaser bei einer Wellenlänge von 488 nm. Es ist ferner geeignet, um blaue Linien und Markierungen, wie sie bei der Erstellung eines Klebeumbruchs für den Zeitungsdruck auf sogenannten Standbögen verwendet werden, beim Kopieren in der Reprokamera auf der elektrophotographischen Druckplatte nicht erscheinen zu lassen. Die Empfindlichkeit sinkt mit zunehmender Wellenlänge über 500 nm hinausgehend dann stark ab, so dass im gelben Spektralbereich in vielen Fällen dann keine ausreichende Empfindlichkeit mehr vorhanden ist, um vergilbte Vorlagen in der Kamera grundfrei reproduzieren zu können. Gerade im Zeitungsdruck, wo elektrophotographische Druckplatten in zunehmendem Masse eingesetzt werden, kommt es aber immer wieder vor, dass bei der Erstellung des Seitenumbruchs auch ältere, bereits vergilbte Text- oder Bildelemente mit eingeklebt werden.

Bei der Belichtung des bekannten Materials wird ausserdem das durch die Lichtquellen der Reprokameras emittierte Licht nur teilweise zur Bilderzeugung ausgenutzt, so dass die Belichtungszeiten relativ lang sind. Andererseits wird von elektrophotographischen Materialien zur Herstellung von Druckformen und gedruckten Schaltungen gefordert, dass sie im roten Spektralbereich unempfindlich sind, so dass sie bei rotem Dunkelkammerlicht gehandhabt werden können.

Es ist auch bekannt (DE-A Nr. 2817428), zur Herstellung von Druckformen und gedruckten Schaltungen auf elektrophotographischem Wege ein panchromatisch sensibilisiertes Aufzeichnungsmaterial zu verwenden, welches in der photoleitfähigen Schicht als Sensibilisator ein Gemisch aus einem Polymethin- und Triarylmethanfarbstoff enthält. Ein solches Material muss jedoch im Dunkeln gehandhabt werden, was zu Schwierigkeiten in der Praxis führt.

Aus der DE-A Nr. 1447907 ist bekannt, wie man für einzelne Farbauszüge beim Druck die Sensibilisatoren auszuwählen hat. Hieraus geht aber keineswegs hervor, wie man vorgehen muss, um ein Aufzeichnungsmaterial zu erstellen, das z.B. bei Rotlicht handhabbar ist.

Es war Aufgabe der vorliegenden Erfindung, ein elektrophotographisches Material zu schaffen, das aufgrund seiner Empfindlichkeit im blauen Spektralbereich mit Milliwatt-Argonionenlasern bebildert werden kann, das bei der Kopie in der Reprokamera blaue Linien und Markierungen nicht wiedergibt, das durch seine Empfindlichkeit im gelben Spektralbereich es gestattet, vergilbte Vorlagen über die Reprokamera einwandfrei wiederzugeben, das die in den Reprokameras zur Verfügung gestellte Lichtenergie optimal ausnutzt und dadurch kurze Belichtungszeiten ergibt und das schliesslich im roten Spektralbereich unempfindlich ist, damit es bei rotem Dunkelkammerlicht gehandhabt werden kann.

Die Lösung dieser Aufgabe geht aus von einem Aufzeichnungsmaterial der in Anspruch 1 genannten Art und ist dadurch gekennzeichnet, dass der Sensibilisierungsfarbstoff des weiteren einen zwischen 450 und 600 nm absorbierenden Aminoxanthenfarbstoff umfasst.

Der in der Kombination verwendete Photoleiter ist im Prinzip bekannt. Es handelt sich um Oxdiazolderivate, wie sie in der DE-PS Nr. 1058836 offenbart sind, wobei insbesondere das 2,5-Bis-(4'-diethylaminophenyl)oxdiazol als besonders geeignet hervorzuheben ist. Ferner können erfindungsgemäss Triphenyloxazolderivate, die in der DE-PS Nr. 1120875 beschrieben sind, eingesetzt werden. Hier sind aufgrund der guten elektrophotographischen Eigenschaften das 2-Phenyl-4-(2'-chlorphenyl)-5-(4''-diethylaminophenyl)-oxazol und das 2,4-Bis-(2'-chlorphenyl)-5-(4''-diethylaminophenyl)oxazol als vorzugsweise geeignet zu nennen.

Als alkalilösliche Bindemittel sind solche zu verstehen, welche in wässerigen oder alkoholischen Lösungsmittelsystemen löslich sind. Dies sind hochmolekulare Substanzen, die alkalilöslich machende Gruppen tragen. Solche Gruppen sind beispielsweise Säure-, Anhydrid-, Carboxyl-, Phenol-, Sulfosäure-, Sulfonamid- oder Sulfonimidgruppen. Bevorzugt werden Bindemittel mit hohen Säurezahlen eingesetzt, da diese in alkalischwässerig-alkoholischen Lösungsmittelsystemen besonders leicht löslich sind. Ganz besonders geeignet sind Mischpolymerisate aus Styrol und

Maleinsäureanhydrid und Terpolymerisate aus Styrol, Methacrylsäure und Methacrylsäureester. Ferner sind auch Mischpolymerisate der Methacrylsäure und Methacrylsäureester als gut geeignet zu nennen.

Zu den erfindungsgemäss geeigneten Cyaninfarbstoffen, die im Wellenlängenbereich von 400 bis 550 nm absorbieren, gehören beispielsweise die folgenden Produkte:

Astrazongelb 3G (C.I. 48 055), Astrazongelb 5G (C.I. 48 065) oder Basic Yellow 52 115 (C.I. 48 060); ferner die noch nicht klassifizierten Farbstoffe Astrazonorange 3R, Astrazongelb 7GLL, Astrazongelb GRL und Astragelb R. Als ganz besonders geeignet erweisen sich Astrazonorange R (C.I. 48 040) und Astrazonorange G (C.I. 48 035). Die Cyaninfarbstoffe werden insbesondere im Gewichtverhältnis 0,001 bis 0,1 Gew.-Teilen pro Gewichtsteil Photoleiter eingesetzt.

Von den zwischen 450 und 600 nm absorbierenden Aminoxanthenfarbstoffen sind die Rhodamine sehr gut geeignet, wobei Rhodamin B und Rhodamin FB (C.I. 45 170) besonders hervorzuheben sind. Ihr Anteil, bezogen auf Photoleiter, beträgt vorzugsweise 0,001 bis 0,01 Gew.-Teile.

Die erfindungsgemässe Kombination wird auf Schichtträger aufgebracht, wie sie zur Herstellung von Druckformen für den Hoch-, Flach- und Tiefdruck und für gedruckte Schaltungen üblich sind. Geeignete Materialien sind Aluminium-, Zink-, Magnesium-, Kupfer- oder Mehrmetallplatten. In besonderen Fällen kommen auch Spezialpapiere oder metallbedampfte Kunststoffolien in Frage. Für den Flachdruck besonders bewährt haben sich oberflächenveredelte Aluminiumfolien. Die Oberflächenveredelung besteht in einer mechanischen oder elektrochemischen Aufrauhung und gegebenenfalls in einer anschliessenden Anodisierung und Behandlung mit Polyvinylphosphonsäure gemäss DE-A Nr. 1621478. Aber auch andere bekannte Verfahren zur Oberflächenveredelung z.B. durch Silikatisierung sind zur Herstellung eines geeigneten Schichtträgers anwendbar. Durch die Oberflächenveredelung wird eine höhere Druckauflage und eine geringere Anfälligkeit gegen Oxidation erzielt.

Das erfindungsgemässe Aufzeichnungsmaterial kann als übliche Zusätze in der photoleitfähigen Schicht Verlaufmittel und Weichmacher und/oder zwischen Schichtträger und Schicht Haftvermittler enthalten.

Durch die vorliegende Erfindung wird ein Aufzeichnungsmaterial mit hervorragenden Eigenschaften geschaffen. Es zeichnet sich durch hohe Lichtempfindlichkeit aus, so dass die Belichtungszeit bei der Verarbeitung in der Reprokamera gegenüber handelsüblichen Materialien um die Hälfte gesenkt werden kann. Die Dunkelentladung ist gering, so dass das bei der Belichtung entstehende latente Ladungsbild einen hohen Ladungskontrast aufweist. Dies führt bei der Betonerung zu einer sehr randscharfen Bildwiedergabe, woraus eine gute Auflösung resultiert. Durch den hohen Ladungskontrast können auch feine Rasterpunkte in den lichten Tonwertbereichen gut wiedergegeben werden. Ferner führt die Hellentladung der Schichten zu sehr geringen Restspannungen, und die bei der Betonerung erhaltenen Bilder zeichnen sich durch gute Grundfreiheit in den Nichtbildbereichen aus. Die spektrale Empfindlichkeit sinkt bei 600 nm stark ab, so dass die Schichten bei Rotlicht gehandhabt werden können, ohne dass Bildverluste auftreten.

Die mit den erfindungsgemässen Schichten hergestellten Druckformen zeichnen sich beim Drukken durch hohe Auflagenstabilität aus. Die Druckauflage liegt bei Verwendung geeigneter Trägermaterialien bei über 100000. Werden die Schichten zur Herstellung gedruckter Schaltungen eingesetzt, so zeigt sich, dass sie gegen die handelsüblichen Ätzen eine hervorragende Resistenz aufweisen.

Die Erfindung wird anhand der folgenden Beispiele näher erläutert.

*Beispiel 1:*

Die in Beispiel 3 der DE-B Nr. 2526720 beschriebene Lösung von 45 g 2-Vinyl-4-(2'-chlorphenyl)-5-(4''-diethylaminophenyl)oxazol, 45 g eines Mischpolymerisats aus Styrol und Maleinsäureanhydrid und 2,25 g Astrazonorange R in 280 g Tetrahydrofuran, 180 g Methylglykol und 84 g Butylacetat wird auf eine 300 µm starke elektrochemisch aufgerauhte, anodisierte und mit Polyvinylphosphonsäure behandelte Aluminiumfolie so aufgetragen, dass nach dem Verdunsten der Lösungsmittel eine etwa 5 µm dicke Photoleiterschicht zurückbleibt. Die Schicht wird mit einer Corona auf −450 V aufgeladen und in einer Reprokamera mit 10 Halogenstrahlern zu je 600 W 26 s belichtet. Als Vorlage dient eine Klebemontage einer Zeitungsseite auf einem Standbogen mit blauen Orientierungslinien. Die Montage enthält u.a. einen Text auf vergilbtem Papier. Nach der Betonerung des durch die Belichtung entstandenen latenten Ladungsbildes zeigt sich, dass zwar die blauen Orientierungslinien des Standbogens auf der elektrophotographischen Kopie nicht erscheinen, dass aber der Text auf vergilbtem Papier nicht grundfrei wiedergegeben wird.

Erfindungsgemäss löst man 40 g 2-Phenyl-4-(2'-chlorphenyl)-5-(4''-diethylaminophenyl)-oxazol und 60 g eines Mischpolymerisats aus Styrol und Maleinsäureanhydrid in einem Lösungsmittelgemisch aus 400 g Tetrahydrofuran, 200 g Methylglykol und 100 g Butylacetat und setzt der Lösung 30 g einer methanolischen Lösung von 2 g Astrazonorange R (C.I. 48 040) und 0,2 g Rhodamin B (C.I. 45 170) zu. Mit dieser Lösung beschichtet man das gleiche Trägermaterial derart, dass nach dem Verdunsten der Lösungsmittel ebenfalls eine Schicht von 5 µm Dicke entsteht. Nach dem Aufladen der Schicht auf −450 V wird die Schicht an der gleichen Reprokamera mit den gleichen Lichtquellen und unter Verwendung derselben Vorlage belichtet. Man stellt fest, dass man, obwohl die Schicht nur 40 statt wie oben beschrieben 50% Photoleiter enthält, zur Belichtung nur 13 s benötigt und man nach dem Betonern ein

völlig grundfreies Bild ohne Wiedergabe der blauen Orientierungslinien erhält.

Die Herstellung der Druckformen erfolgt nach dem in der DE-PS Nr. 1117391 beschriebenen Verfahren.

*Beispiel 2:*

Eine durch Drahtbürstung mechanisch oberflächlich aufgerauhte Aluminiumfolie wird mit einer Lösung von 20 g 2,4-Bis-(2'-chlorphenyl)-5-(4"-diethylaminophenyl)oxazol und 30 g eines Mischpolymerisats aus Styrol und Maleinsäureanhydrid in 240 ml Tetrahydrofuran, 150 ml Methylglykol und 60 ml Butylacetat beschichtet, der 20 ml einer methanolischen Sensibilisatorlösung enthaltend 1 g Astrazongelb 7GLL (C.I. Basic Yellow 21) und 0,1 g Rhodamin FB (C.I. 45 170) zugesetzt wurde. Nach dem Verdunsten der Lösungsmittel erhält man eine etwa 5 µm dicke Photoleiterschicht, die im Dunkeln mit Hilfe einer Corona auf etwa 450 V negativ aufgeladen wird. Die aufgeladene Photoleiterschicht wird in einer Reprokamera belichtet, wobei bei Verwendung von 8 Autophot-Lampen zu je 500 W die Belichtungszeit 15 s beträgt. Als Vorlage dient eine im Zeitungsdruck übliche Klebemontage mit blauen Orientierungslinien und eingeklebten vergilbten Textausschnitten. Nach der Betonerung des durch die Belichtung entstandenen latenten Ladungsbildes mit einem handelsüblichen Toner erhält man ein sauberes, grundfreies randscharfes Bild der Vorlage, das durch Wärmeeinwirkung fixiert wird. Zur Umwandlung in eine Druckform bringt man die Aluminiumfolie mit der betonerten Photoleiterschicht in eine Küvette, die eine Lösung von 35 g Natriummetasilikat-9 · Hydrat in 140 ml Glycerin mit einem Wassergehalt von 20%, 550 ml Ethylenglycol und 140 ml Ethanol enthält. Nach 1 min spült man die an den nicht betonerten Stellen angelöste Photoleiterschicht unter leichtem Reiben mit einem Wasserstrahl ab. Die Platte ist druckfertig. Die Druckauflage liegt aufgrund des verwendeten Trägermaterials bei 80000. Im Falle eines erst späteren Druckvorgangs muss die Platte mit einer handelsüblichen Konservierungs- oder Gummierungslösung konserviert werden.

*Beispiel 3:*

Zur Beschichtung einer elektrochemisch aufgerauhten, anodisierten und mit Polyvinylphosphonsäure behandelten Aluminiumfolie verwendet man eine Lösung von 20 g 2-Phenyl-4-(2'-chlorphenyl)-5-(4"-diethylaminophenyl)-oxazol und 30 g eines Mischpolymeriats aus Styrol und Maleinsäureanhydrid in einem Lösungsmittelgemisch aus 240 ml Tetrahydrofuran, 150 ml Methylglykol und 60 ml Butylacetat, dem man 20 ml einer methanolischen Lösung von 1 g Astrazonorange R (C.I. 48 040) und 0,1 g Rhodamin FB (C.I. 45 170) zugesetzt hat. Man erhält nach dem Entfernen der Lösungsmittel eine elektrophotographische Druckplatte mit einer etwa 5 µm dicken Photoleiterschicht. Zur weiteren Verarbeitung wird die Platte in einen Automaten gegeben, wie er zur Herstellung von Zeitungsdruckformen im Handel ist. Die Platte wird darin aufgeladen, mit einem 10-mW-Argonionenlaser bei 488 nm belichtet, betonert und fixiert. Zur Entladung der Photoleiterschicht von 450 V auf eine Restspannung von 50 V ist bei 488 nm eine Energiedichte von etwa 30 $\mu J/cm^2$ erforderlich. Die gesamte Bebilderungszeit für eine Druckplatte im Zeitungsformat (378 × 587 mm) beträgt im Automaten etwa 4 min, wobei für die Belichtung etwa 80 s erforderlich sind, wenn der Laser mit halber Ausgangsleistung betrieben wird. Nach der Betonerung wird die Platte durch Weglösen der Photoleiterschicht an den nicht betonerten Stellen wie in Beispiel 2 beschrieben in eine Druckform umgewandelt, mit der auf einer Rollenoffsetmaschine etwa 150000 Drucke hergestellt werden können.

*Beispiel 4:*

Auf einen mit Kupfer laminierten Phenoplastschichtstoff, wie er zur Herstellung gedruckter Schaltungen verwendet wird, wird eine Lösung aufgebracht, die man erhält, wenn man 20 g 2,5-Bis-(4-diethylaminophenyl)oxdiazol-1,3,4 und 30 g eines Mischpolymerisats aus 80% Methylmethacrylat und 20% Methacrylsäure in einem Lösungsmittelgemisch aus 240 ml Tetrahydrofuran, 150 ml Methylglykol und 60 ml Butylacetat löst, und der man 20 ml einer methanolischen Lösung von 1 g Astrazonorange G (C.I. 48 035) und 0,1 g Rhodamin FB (C.I. 45 170) zugesetzt hat. Nach dem Verdunsten der Lösungsmittel wird die etwa 5 µm dicke Photoleiterschicht mit Hilfe einer Corona auf 450 V negativ aufgeladen und das Bild einer gedruckten Schaltung aufbelichtet. Bei einer Kontaktbelichtung im Kopierrahmen beträgt die Belichtungszeit unter Verwendung einer 100-W-Glühbirne im Abstand von 60 cm 2 s. Nach dem Betonern und Fixieren wird die Photoleiterschicht an vom Toner nicht bedeckten Stellen in der in Beispiel 2 beschriebenen Weise weggelöst. Anschliessend wird das freigelegte Kupfer mit einer handelsüblichen Ätze entfernt. Durch Auswaschen mit einem Lösungsmittel, beispielsweise einem Keton, wird die Leiterbahn aus Kupfer vom Toner und der Photoleiterschicht befreit.

**Patentansprüche**

1. Elektrophotographisches Aufzeichnungsmaterial aus einem elektrisch leitenden, insbesondere zur Herstellung von Druckformen oder gedruckten Schaltungen geeigneten Schichtträger und einer photoleitfähigen Schicht aus organischem Photoleiter, alkalilöslichem Bindemittel, Sensibilisierungsfarbstoff aus zwischen 400 und 550 nm absorbierendem Cyaninfarbstoff und üblichen Zusätzen, wobei der Photoleiter eine Verbindung der allgemeinen Formel

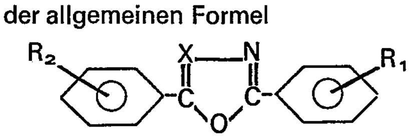

darstellt, in welcher

$R_1$ Wasserstoff, Alkyl, Alkoxy mit 1 bis 4 Kohlenstoffatomen, Halogen oder Dialkylamino mit 1 bis 4 Kohlenstoffatomen,

$R_2$ Dialkylamino mit 1 bis 4 Kohlenstoffatomen, und

X Stickstoff oder $-CR_3$ mit $R_3$ gegebenenfalls durch Halogen-, Alkylamino- oder Dialkylaminogruppen oder Alkyl mit 1 bis 4 Kohlenstoffatomen substituiertes Phenyl

bedeuten, dadurch gekennzeichnet, dass der Sensibilisierungsfarbstoff des weiteren einen zwischen 450 und 600 nm absorbierenden Aminoxanthenfarbstoff umfasst.

2. Aufzeichnungsmaterial nach Anspruch 1, dadurch gekennzeichnet, dass die photoleitfähige Schicht als Photoleiter 2,4-Bis-(2'-chlorphenyl)-5-(4"-diethylaminophenyl)oxazol enthält.

3. Aufzeichnungsmaterial nach Anspruch 1, dadurch gekennzeichnet, dass die photoleitfähige Schicht als Photoleiter 2-Phenyl-4-(2'-chlorphenyl)-5-(4"-diethylaminophenyl)oxazol enthält.

4. Aufzeichnungsmaterial nach Anspruch 1, dadurch gekennzeichnet, dass die photoleitfähige Schicht als Photoleiter 2,5-Bis-(4'-diethylaminophenyl)oxdiazol-1,3,4 enthält.

5. Aufzeichnungsmaterial nach den Ansprüchen 1 bis 4, dadurch gekennzeichnet, dass die photoleitfähige Schicht als Bindemittel ein Styrol/Maleinsäureanhydrid-Mischpolymerisat enthält.

6. Aufzeichnungsmaterial nach den Ansprüchen 1 bis 4, dadurch gekennzeichnet, dass die photoleitfähige Schicht als Bindemittel ein Terpolymerisat aus Styrol, Methacrylsäure und Methacrylsäureester enthält.

7. Aufzeichnungsmaterial nach den Ansprüchen 1 bis 4, dadurch gekennzeichnet, dass die photoleitfähige Schicht als Bindemittel ein Mischpolymerisat aus Methacrylsäure und Methacrylsäureester enthält.

8. Aufzeichnungsmaterial nach den Ansprüchen 1 bis 7, dadurch gekennzeichnet, dass die photoleitfähige Schicht als Sensibilisierungsfarbstoff ein Gemisch aus Astrazonorange R (C.I. 48 040) und Rhodamin FB (C.I. 45 170) enthält.

9. Aufzeichnungsmaterial nach den Ansprüchen 1 bis 8, dadurch gekennzeichnet, dass der Schichtträger eine oberflächlich mechanisch aufgerauhte Aluminiumfolie ist.

10. Aufzeichnungsmaterial nach den Ansprüchen 1 bis 8, dadurch gekennzeichnet, dass der Schichtträger eine oberflächlich elektrochemisch aufgerauhte, eloxierte und gegebenenfalls mit Polyvinylphosphonsäure oder mit Silikat behandelte Aluminiumfolie enthält.

## Claims

1. An electrophotographic recording material, consisting of an electrically conductive layer support, in particular a support suitable for the manufacture of printing forms or printed circuits, and of a photoconductive layer comprising an organic photoconductor, an alkali-soluble binder, a sensitizing dyestuff, which comprises a cyanine dyestuff absorbing between 400 and 550 nm, and conventional additives, whereby the photoconductor represents a compound of the general formula

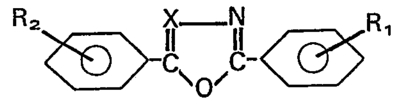

in which $R_1$ denotes hydrogen, alkyl, alkoxy having 1 to 4 C atoms, halogen or dialkylamino having 1 to 4 C atoms,

$R_2$ denotes dialkylamino having 1 to 4 C atoms, and

X denotes nitrogen or $-CR_3$ with $R_3$ being phenyl which is optionally substituted by halogen, alkylamino or dialkylamino groups or alkyl having 1 to 4 C atoms,

characterized in that the sensitizing dyestuff furthermore comprises an aminoxanthene dyestuff absorbing between 450 and 600 nm.

2. A recording material as claimed in Claim 1, wherein the photoconductive layer contains 2,4-bis-(2'-chlorophenyl)-5-(4"-diethylaminophenyl)oxazole as the photoconductor.

3. A recording material as claimed in Claim 1, wherein the photoconductive layer contains 2-phenyl-4-(2'-chlorophenyl)-5-(4"-diethylaminophenyl)oxazole as the photoconductor.

4. A recording material as claimed in Claim 1, wherein the photoconductive layer contains 2,5-bis-(4'-diethylaminophenyl)-1,3,4-oxadiazole as the photoconductor.

5. A recording material as claimed in Claims 1 to 4, wherein the photoconductive layer contains a styrene/maleic acid anhydride copolymer as the binder.

6. A recording material as claimed in Claims 1 to 4, wherein the photoconductive layer contains a terpolymer of styrene, methacrylic acid and methacrylic acid ester as the binder.

7. A recording material as claimed in Claims 1 to 4, wherein the photoconductive layer contains a copolymer of methacrylic acid and methacrylic acid ester as the binder.

8. A recording material as claimed in Claims 1 to 7, wherein the photoconductive layer contains a mixture of Astrazon Orange R (C.I. 48,040) and Rhodamine FB (C.I. 45,170) as the sensitizing dyestuff.

9. A recording material as claimed in Claims 1 to 8, wherein the layer support is an aluminium foil, the surface of which has been mechanically roughened.

10. A recording material as claimed in Claims 1 to 8, wherein the layer support is comprised of an aluminum foil, the surface of which has been electromechanically roughened, anodically oxidized and, if appropriate, treated with polyvinylphosphonic acid or with silicate.

## Revendications

1. Matière de reproduction électrophotographique constituée d'un support de couche électriquement conducteur, convenant en particulier pour la fabrication de formes d'impression ou de circuits imprimés, et d'une couche photoconductrice constituée d'un photoconducteur organique, d'un liant soluble dans les alcalis, d'un colorant de sensibilisation constitué d'un colorant de cyanine absorbant entre 400 et 550 nm et d'additifs usuels, le photoconducteur représentant un composé répondant à la formule générale

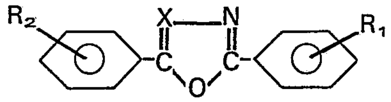

dans laquelle

$R_1$ désigne l'hydrogène, un alkyle, un alcoxy en $C_1$ à $C_4$, un halogène ou un dialkylamino en $C_1$ à $C_4$,

$R_2$ désigne un dialkylamino en $C_1$ à $C_4$, et

X désigne l'azote ou $-CR_3$ avec $R_3$ représentant un phényle éventuellement substitué par des groupes halogène, alkylamino ou dialkylamino ou un alkyle en $C_1$ à $C_4$,

caractérisée en ce que le colorant de sensibilisation comprend en outre un colorant d'aminoxanthène absorbant entre 450 et 600 nm.

2. Matière de reproduction suivant la revendication 1, caractérisée en ce que la couche photoconductrice contient comme photoconducteur le 2,4-bis-(2'-chlorophényl)-5-(4''-diéthylaminophényl)oxazole.

3. Matière de reproduction suivant la revendication 1, caractérisée en ce que la couche photoconductrice contient comme photoconducteur du 2-phényl-4-(2'-chlorophényl)-5-(4''-diéthylaminophényl)oxazole.

4. Matière de reproduction suivant la revendication 1, caractérisée en ce que la couche photoconductrice contient comme photoconducteur du 2,5-bis-(4'-diéthylaminophényl)oxdiazole-1,3,4.

5. Matière de reproduction suivant les revendications 1 à 4, caractérisée en ce que la couche photoconductrice contient comme liant un copolymère styrène/anhydride maléique.

6. Matière de reproduction suivant les revendications 1 à 4, caractérisée en ce que la couche photoconductrice contient comme liant un terpolymère de styrène, d'acide méthacrylique et d'ester de l'acide méthacrylique.

7. Matière de reproduction suivant les revendications 1 à 4, caractérisée en ce que la couche photoconductrice contient comme liant un copolymère d'acide méthacrylique et d'ester de l'acide méthacrylique.

8. Matière de reproduction suivant les revendications 1 à 7, caractérisée en ce que la couche photoconductrice contient comme colorant de sensibilisation un mélange d'orangé Astrazon R (C.I. 48 040) et de rhodamine FB (C.I. 45 170).

9. Matière de reproduction suivant les revendications 1 à 8, caractérisée en ce que le support de couche est une feuille d'aluminium dépolie mécaniquement en surface.

10. Matière de reproduction suivant les revendications 1 à 8, caractérisée en ce que le support de couche contient une feuille d'aluminium dépolie électrochimiquement en surface, anodisée, et, le cas échéant, traitée avec de l'acide polyvinylphosphonique ou avec du silicate.